# DEMANDE DE BREVET EUROPEEN

(11) **EP 2 950 027 A1**
(43) Date de publication de la demande: **02.12.2015**
(21) Numéro de dépôt: 15168517.9
(22) Date de dépôt: 20.05.2015
(51) Int. Cl.: F28D 9/00, F28D 20/02

(54) **ECHANGEUR DE CHALEUR COMPRENANT UN COMPOSANT ADAPTE POUR STOCKER ET LIBERER UNE QUANTITE DETERMINEE DE CHALEUR**

(30) Priorité: 27.05.2014 FR 1454759
(71) Demandeur: Valeo Systemes Thermiques, 78320 Le Mesnil-Saint-Denis (FR)
(72) Inventeur: Azzouz, Kamel, 75012 Paris (FR)
(74) Mandataire: Metz, Gaëlle

(57) **Abrégé**

La présente invention concerne un échangeur de chaleur (10, 110, 210) pour échanger de la chaleur entre un premier composant dynamique et un composant statique, ledit échangeur de chaleur (10, 110, 210) comprenant un conteneur (11) et un faisceau d'échange (12, 112, 212) encapsulé dans ledit conteneur (11), ledit faisceau d'échange (12, 112, 212) comprenant au moins un premier conduit (20) pour guider le premier composant dynamique d'une première entrée vers une première sortie, le composant statique étant adjacent audit conduit et positionné à l'intérieur dudit faisceau d'échange (12, 112, 212), ledit composant statique étant adapté pour stocker et libérer une quantité déterminée de chaleur afin de permettre un échange de chaleur entre le premier composant dynamique et le composant statique.

## Description

### Domaine de l'invention

La présente invention concerne un échangeur de chaleur, par exemple un échangeur de chaleur destiné à un véhicule automobile. Plus précisément, l'invention concerne un échangeur de chaleur permettant l'échange de chaleur entre un composant dynamique et un composant statique afin de stocker et libérer une quantité déterminée de chaleur pour refroidir ou chauffer de l'huile, telle que de l'huile de moteur ou de l'huile de boîte de vitesse, et ce afin d'améliorer le fonctionnement du moteur ou de la boîte de vitesse à l'intérieur duquel ou de laquelle cette huile est utilisée.

### Etat de la technique

Un échangeur de chaleur, utilisé dans l'industrie automobile, et plus précisément un échangeur de chaleur adapté pour refroidir de l'huile telle que de l'huile de moteur ou de l'huile de boîte de vitesse comprend, en règle générale, un boîtier ou carter comportant, en son intérieur, des éléments d'échange de chaleur permettant l'échange de chaleur de l'huile de moteur ou de l'huile de boîte de vitesse, et un deuxième composant tel qu'un fluide. Ces éléments d'échange de chaleur peuvent, par exemple, comporter une pluralité de tubes.

Les tubes, situés à l'intérieur d'un échangeur de chaleur, peuvent être présents au sein d'un faisceau d'échange et disposés de façon essentiellement parallèle, les uns par rapport aux autres. Les tubes peuvent être positionnés sur une rangée ou plusieurs rangées parallèles entre elles. Les tubes permettent de guider le premier fluide, tel que l'huile de moteur ou l'huile de boîte de vitesse, à l'intérieur desdits tubes, d'une première entrée pour ce premier fluide vers une première sortie associée audit premier fluide.

Afin de permettre l'échange de chaleur entre un premier fluide, tel que l'huile de moteur ou l'huile de boîte de vitesse, et un deuxième composant, par exemple un deuxième fluide, les tubes utilisés pour guider le premier fluide depuis son entrée vers sa sortie, sont positionnés de manière adjacente au deuxième composant pour permettre audit deuxième composant d'échanger de la chaleur avec le premier fluide.

La température de l'huile de moteur ou de l'huile de boîte de vitesse influence de manière non négligeable la consommation en carburant du véhicule automobile pendant le fonctionnement du moteur ou de la boîte de vitesse dudit véhicule automobile.

Ainsi, par exemple, le démarrage à froid d'un moteur à combustion interne constitue, à ce jour, un point faible sur le cycle européen de référence ou nouveau cycle européen de conduite (New European Driving Cycle NEDC1). En effet, la surconsommation de carburant lors du démarrage à froid y a évolué entre 15% et 20%, couplée à un rejet de polluant de type Hydrocarbure. Cette surconsommation s'explique, notamment, par l'existence d'un grand nombre de frottements, lors du démarrage à froid, entre les éléments du moteur et les éléments de la boîte de vitesse dans la mesure où la température de l'huile de moteur ou de l'huile de boîte de vitesse est en cours d'augmentation pour parvenir une température d'utilisation optimale.

Dans l'art antérieur, plusieurs solutions permettant d'augmenter la température de l'huile de moteur ou de l'huile de boîte de vitesse après le démarrage à froid d'un moteur sont proposées et ce, afin de limiter le délai pendant lequel le moteur est contraint de fonctionner en mode de surconsommation de carburant.

Ainsi, la plupart des solutions connues de l'art antérieur nécessitent l'utilisation de pièces supplémentaires pour augmenter la température de l'huile de moteur immédiatement après le démarrage à froid dudit moteur. Cependant, l'ajout de ces pièces nécessite un volume spécifique au sein du compartiment du moteur du véhicule automobile. Ainsi, l'implémentation de telles pièces n'est pas toujours réalisable compte tenu des marges de fabrication disponibles.

Il apparaît que des améliorations, permettant de limiter en particulier les frottements présents dans la boîte de vitesse durant la phase d'augmentation de la température de l'huile utilisée dans la boîte de vitesse, s'avèrent nécessaires afin de limiter la surconsommation de carburant.

### Objet de l'invention

L'échangeur de chaleur selon la présente invention vise à améliorer les possibilités de contrôler la température de l'huile, en particulier de l'huile utilisée dans la boîte de vitesse, pendant la phase d'augmentation de la température de l'huile lors du démarrage à froid d'un moteur.

A cet effet, la présente invention a pour but d'améliorer le fonctionnement des éléments existants d'un moteur à combustion. De ce fait, le volume au sein du compartiment du moteur n'est pas modifié. Ainsi, la présente invention concerne un échangeur de chaleur pour échanger de la chaleur entre un premier composant dynamique et un composant statique, ledit échangeur de chaleur comprenant un conteneur et un faisceau d'échange encapsulé dans ledit conteneur, ledit faisceau d'échange comprenant au moins un conduit pour guider le premier composant dynamique d'une première entrée vers une première sortie, le composant statique étant adjacent audit conduit et positionné à l'intérieur dudit faisceau d'échange, ledit composant statique étant adapté pour stocker et libérer une quantité déterminée de chaleur, permettant ainsi un échange de chaleur entre le premier composant dynamique et le premier composant statique.

Dans la présente description, le mot « composant » est utilisé pour faire référence à tout matériau adapté pour stocker une quantité de chaleur déterminée et échanger de la chaleur avec un autre composant.

L'expression « composant dynamique » est utilisée pour faire référence à un matériau, tel qu'un fluide, capable de se déplacer d'une première position vers une deuxième position, par exemple pour se déplacer par rapport à un autre composant, permettant ainsi un échange de chaleur entre le composant dynamique et l'autre composant.

L'expression « composant statique » est utilisée pour faire référence à un matériau adapté pour occuper une même position pendant un éventuel échange de chaleur avec un autre composant.

Selon la présente invention, un échangeur de chaleur est adapté pour refroidir de l'huile, et plus particulièrement de l'huile de boîte de vitesse, sous la forme d'un composant dynamique qui se déplace d'une entrée vers une sortie destinées audit composant dynamique.

Pendant le déplacement du premier composant dynamique entre l'entrée et la sortie, le premier composant dynamique peut être refroidi grâce à un composant statique. En d'autres termes, le composant statique ne se déplace pas mais est capable d'échanger de la chaleur avec le premier composant dynamique, tel que l'huile, et plus particulièrement de l'huile de boîte de vitesse, pour ainsi refroidir l'huile et en particulier ladite huile de boîte de vitesse.

Après un laps de temps, une quantité de chaleur est stockée à l'intérieur du composant statique. Afin de garantir le stockage efficace de la chaleur et la disponibilité de la chaleur à l'intérieur du composant statique, l'échangeur de chaleur comprend un carter ou conteneur adapté pour assurer une fonction d'isolant et conserver la chaleur durant un laps de temps déterminé, à l'intérieur dudit composant statique.

En pratique, cela signifie que l'échangeur de chaleur est capable, lorsque que le moteur fonctionne, de stocker une quantité de chaleur en son sein. Pendant la phase d'augmentation de la température de l'huile, et plus particulièrement de l'huile de boîte de vitesse, lors d'un démarrage à froid, l'huile est de nouveau guidée à l'intérieur de l'échangeur de chaleur de l'entrée vers la sortie associée à l'huile. Le composant statique, présent à l'intérieur de l'échangeur de chaleur, est capable d'échanger de la chaleur avec le premier composant dynamique, plus particulièrement avec l'huile de moteur ou l'huile de boîte de vitesse. Lors de cette phase d'augmentation de la température, l'échangeur de chaleur n'est pas utilisé pour refroidir l'huile de moteur ou l'huile de boîte de vitesse comme généralement prévu dans l'art antérieur. En effet, l'échangeur de chaleur est utilisé, selon la présente invention, pour permettre l'augmentation de la température de l'huile de moteur ou de l'huile de boîte de vitesse et ce, le plus rapidement possible.

En faisant référence aux observations ci-dessus, au sein de la présente invention, l'échangeur de chaleur, selon l'art antérieur, nécessaire pour refroidir de l'huile, et en particulier l'huile de boîte de vitesse, est modifié pour assurer une augmentation de la température de l'huile, et particulièrement l'huile de la boîte de vitesse, la plus rapide possible.

Selon la présente invention, le premier composant dynamique peut comprendre un fluide.

Selon la présente invention, le composant statique peut comprendre un matériau à changement de phase (MCP).

Selon la présente invention, la température de changement de phase du matériau à changement de phase (MCP) est comprise entre 60°C et 95°C, préférablement entre 70°C et 90°C.

Selon la présente invention, le matériau à changement de phase comprend un eutectique.

Selon la présente invention, le faisceau d'échange comprend au moins un deuxième conduit pour guider un deuxième composant dynamique d'une deuxième entrée vers une deuxième sortie, ledit deuxième conduit étant adjacent au conduit pour guider le premier composant dynamique de son entrée vers sa sortie, et positionné à l'intérieur du faisceau d'échange pour permettre un échange de chaleur entre le composant dynamique et le deuxième composant dynamique.

Selon la présente invention, lesdits conduits permettant de guider le premier composant dynamique et le deuxième composant dynamique sont positionnés pour permettre une circulation du composant dynamique à contre-courant de la circulation du deuxième composant dynamique.

Selon la présente invention, le faisceau d'échange de chaleur comprend une première zone pour permettre l'échange de chaleur entre le premier composant dynamique et le composant statique, et une deuxième zone pour permettre l'échange de chaleur entre le premier composant dynamique et le deuxième composant dynamique.

### Brève descriptions des dessins

Les but, objet et caractéristiques de la présente invention ainsi que ses avantages apparaîtront plus clairement à la lecture de la description ci-dessous, des modes de réalisation préférés d'un échangeur de chaleur selon l'invention, faite en référence aux dessins dans lesquels :
- la figure 1 montre en détail, selon une perspective éclatée, l'échangeur de chaleur selon l'invention,
- la figure 2 représente une vue, en perspective éclatée, d'un échangeur de chaleur selon un deuxième mode de réalisation de la présente invention,
- la figure 3 montre une vue, en perspective éclatée, d'un échangeur de chaleur selon un troisième mode de réalisation de la présente invention,
- la figure 4 montre une représentation schématique de la boucle de refroidissement intégrant un échangeur de chaleur selon l'invention,
- la figure 5 représente une vue schématique de la boucle de refroidissement intégrant uniquement un échangeur de chaleur selon l'invention, et
- la figure 6 montre une vue schématique de la boucle de refroidissement intégrant un échangeur de chaleur selon le troisième mode de réalisation tel que montré sur la figure 3.

### Description détaillée des modes de réalisation

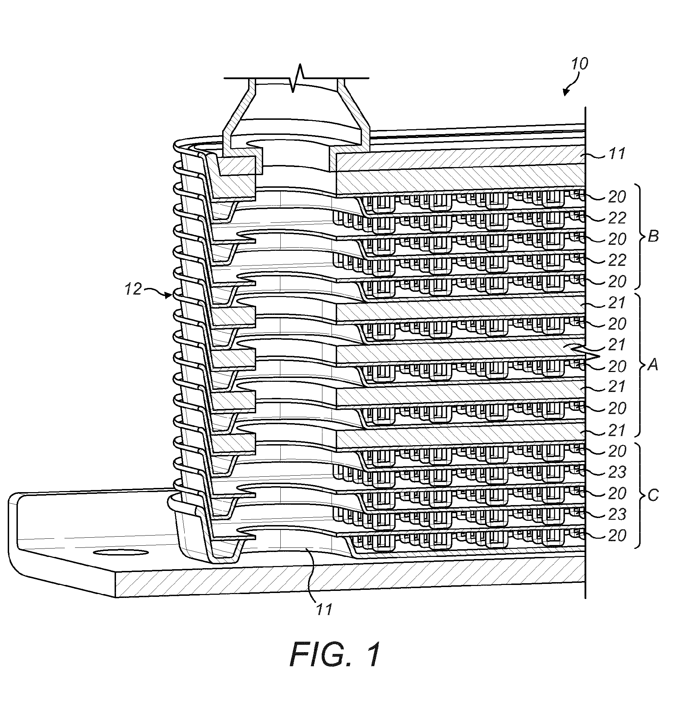

La figure 1 montre une vue, en perspective éclatée, de l'échangeur de chaleur 10 selon un premier mode de réalisation de la présente invention. L'échangeur de chaleur 10 comprend un conteneur 11 et un faisceau d'échange 12 encapsulé au sein du conteneur 11. La figure 1 divulgue seulement une partie du conteneur 11. Le faisceau d'échange 12 comprend plusieurs éléments décrits ci-dessous permettant l'échange de chaleur entre au moins un premier composant et un deuxième composant.

Selon la figure 1, le faisceau d'échange 12 comporte des premiers éléments 20 ou premiers conduits 20 adaptés pour guider un premier composant ou premier composant dynamique, tel qu'un fluide, depuis une entrée relative audit premier composant vers une sortie relative audit premier composant. Les premiers conduits 20 correspondent à des espaces qui peuvent être obtenus grâce à un empilement de plaques permettant de créer une structure modulaire. Dans ces plaques, lesdits espaces sont formés par l'espace libre situé entre deux plaques adjacentes. Dans l'art antérieur, une structure de ce type est connue afin de permettre un échange de chaleur au sein d'un échangeur de chaleur.

De plus, le faisceau d'échange 12 comprend des deuxièmes éléments 21 adaptés chacun pour contenir un composant statique adapté pour stocker une quantité déterminée de chaleur. Les deuxièmes éléments 21 sont positionnés de manière adjacente aux premiers éléments 20 afin de permettre un échange de chaleur entre le premier composant dynamique, se déplaçant à l'intérieur des premiers éléments 20, et le deuxième composant, statique présent entre deux premiers éléments 20 adjacents. Par ailleurs, le composant statique peut être réalisé à l'aide de toute matière adaptée. Selon la présente invention, le composant statique comprend, par exemple, un matériau à changement de phase (MCP). Ce type de matériau est souvent indiqué à l'aide du terme anglais « phase changing material » ou PCM.

Le MCP, tel que représenté sur la figure 1, peut être sélectionné selon un premier critère relatif aux capacités du PCM à supporter une température de changement de phase se situant entre 70° et 90° et ce, dans le but de constituer une source chaude pour chauffer le premier composant dynamique tel que de l'huile. Le MCP permet de garantir une importante capacité de stockage de chaleur. Le MCP peut également être sélectionné selon un deuxième critère relatif au type de transfert de chaleur. En effet, le MCP doit permettre un transfert de chaleur latente. Le MCP comprend, par exemple, un eutectique offrant une chaleur latente de 391 kJ/m³. Le MCP pourrait aussi être organique, inorganique ou composite.

L'utilisation des premier et deuxième éléments 20, 21, telle que montrée sur la figure 1, permet, lors de la circulation d'un premier composant dynamique sous la forme d'un fluide, tel que de l'huile, à l'intérieur des premiers éléments 20 et lorsque la température dudit fluide est supérieure à celle des deuxièmes éléments 21, l'échange d'une quantité déterminée de chaleur entre le fluide, située à l'intérieur des premiers éléments 20, et les deuxièmes éléments 21 afin de stocker ladite quantité déterminée de chaleur à l'intérieur desdits deuxièmes éléments 21. Ainsi, les deuxièmes éléments 21 sont utilisés afin de retirer une quantité déterminée de chaleur du fluide présent à l'intérieur des premiers éléments 20 et de refroidir ainsi ledit fluide en mouvement à l'intérieur desdits premiers éléments 20. De façon simultanée, la quantité déterminée de chaleur, stockée à l'intérieur des deuxièmes éléments 21 au moyen du composant statique, est disponible pour être utilisée, de façon différée, afin de chauffer un fluide se déplaçant à l'intérieur des premiers éléments 20 lorsque ledit fluide présente une température inférieure à celle du composant statique.

La zone comprenant des premiers éléments 20 adjacents à des deuxièmes éléments 21 correspond à une «zone de stockage de chaleur», telle qu'indiqué avec la référence A sur la figure 1. La zone A permet également de stocker une quantité déterminée de chaleur. Lorsque la température d'un fluide tel que de l'huile circulant à l'intérieur de l'échangeur de chaleur 10 est relativement basse, la zone A peut être utilisée pour augmenter rapidement la température de l'huile.

Comme cela est indiqué sur la figure 1, le faisceau d'échange 12 est, de plus, pourvu d'éléments de refroidissement 22, 23 ou deuxièmes conduits 22, 23. Les éléments de refroidissement 22, 23 sont adaptés pour guider un deuxième composant dynamique, tel qu'un fluide, d'une entrée relative audit deuxième composant dynamique vers une sortie relative audit deuxième composant dynamique. Le deuxième composant dynamique peut se présenter, par exemple, sous la forme d'un fluide de type « eau glycolée ». Ce type de fluide est adapté et utilisé pour refroidir un fluide tel qu'une huile au sein d'un échangeur de chaleur. Les éléments de refroidissement 22, 23 peuvent être adaptés afin de permettre la circulation, à contre-courant, du premier composant dynamique par rapport au deuxième composant dynamique. Les éléments de refroidissement 22 et les premiers éléments 20 adjacents forment une zone B, telle que montrée sur la figure 1. De manière similaire, les éléments de refroidissement 23 et les premiers éléments 20 adjacents forment une zone C. Les zones B et C sont spécifiquement adaptées pour refroidir le premier composant dynamique au moyen du deuxième composant dynamique.

Ainsi, l'échangeur de chaleur 10, tel que représenté sur la figure 1, est adapté pour exercer deux fonctions au sein dudit échangeur de chaleur 10. La première fonction de l'échangeur de chaleur 10 est de permettre le refroidissement d'un premier composant dynamique tel que de l'huile. Cette huile est, selon la présente invention, plus particulièrement l'huile de boîte de vitesse. La deuxième fonction de l'échangeur de chaleur 10 consiste à stocker une quantité déterminée de chaleur dans la zone A afin de rendre cette chaleur disponible à l'intérieur dudit échangeur de chaleur 10.

En fonction de la température de l'huile circulant à l'intérieur de l'échangeur 10 selon la présente invention, l'huile peut être refroidie grâce aux zones A et/ou B et/ou C.

En faisant référence à la figure 1 et, au regard du fonctionnement des différentes zones A, B et C du faisceau d'échange 12 de l'échangeur de chaleur 10 et de la structure modulaire du faisceau d'échange 12, l'importance respective des différentes zones A, B et C peut être modifiée en fonction du nombre de plaques empilées.

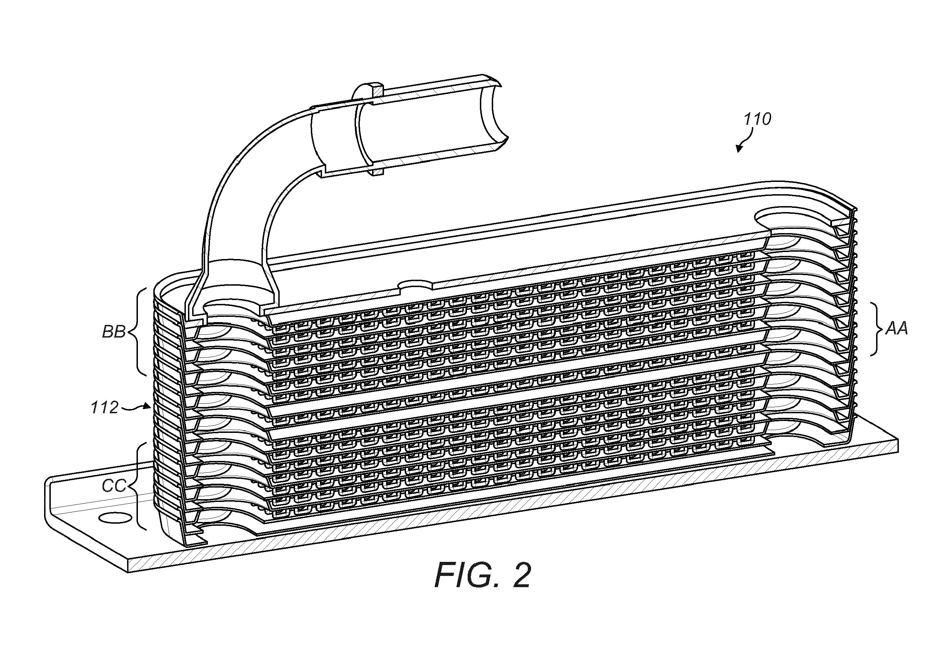

La figure 2 présente une vue, en perspective éclatée, d'un échangeur de chaleur 110, comprenant un faisceau d'échange 112, selon un deuxième mode de réalisation de la présente invention. L'échangeur de chaleur 110, selon la figure 2, comprend une zone AA représentant 25% du volume effectif du faisceau d'échange 112. Les zones BB et CC occupent un volume effectif de 75% du faisceau d'échange 112 pour le refroidissement d'un premier composant dynamique. La capacité de fonctionnement des zones BB et CC correspond donc à ce volume effectif.

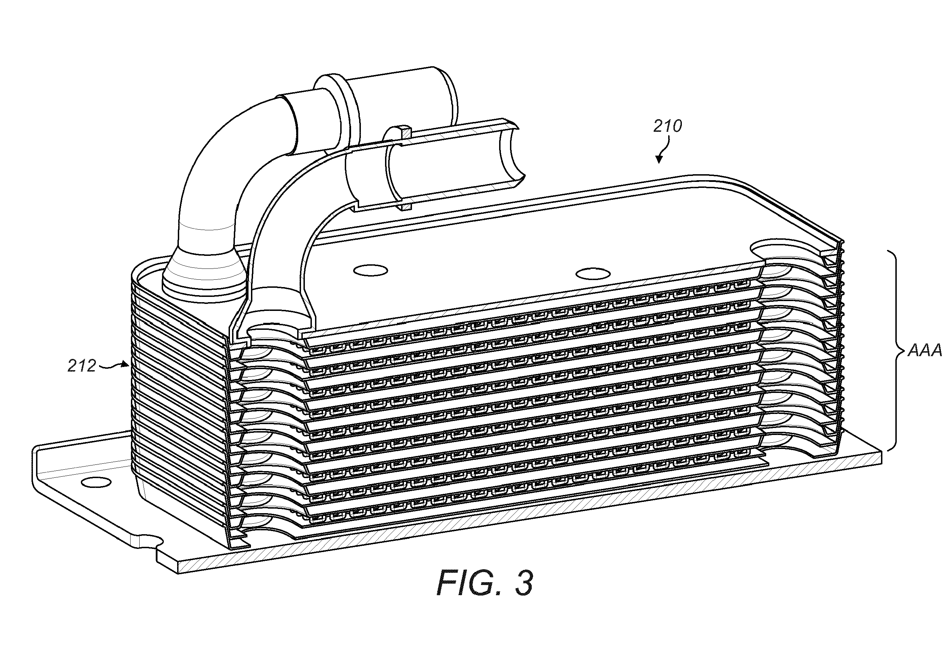

La figure 3 montre une vue, en perspective éclatée, d'un échangeur de chaleur 210, comprenant un faisceau d'échange 212, selon un troisième mode de réalisation de la présente invention. L'échangeur de chaleur 210, selon la figure 3, comprend une zone AAA représentant 100% du volume effectif du faisceau d'échange 212 de l'échangeur de chaleur 210. La capacité de fonctionnement de la zone AAA correspond donc à ce volume effectif.

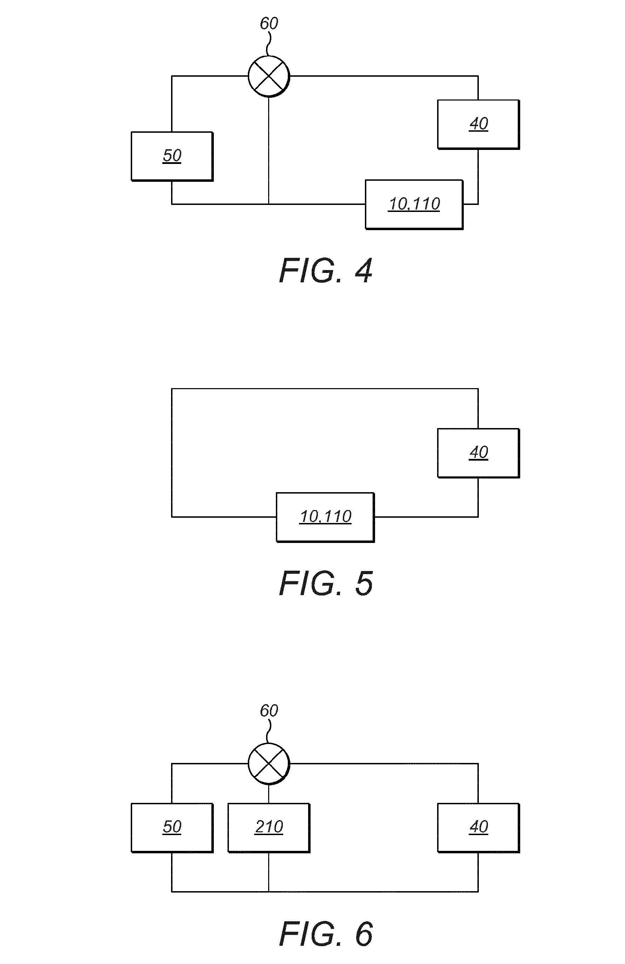

L'échangeur 10, 110, 210, tel que décrit en faisant référence aux figures 1, 2, 3, peut être utilisé au sein de différents types de boucles de refroidissement. Selon la figure 4, un véhicule automobile comprenant une boîte de vitesse automatique 40 comprend une boucle de refroidissement comprenant, notamment, une pompe (non montrée), un échangeur de chaleur 10, 110, selon la présente invention, un échangeur de chaleur 50 adapté pour refroidir de l'huile, un moyen de réglage d'un fluide sous la forme d'une valve 60 et la boîte de vitesse automatique 40.

Au cours d'un cycle de refroidissement, l'huile présentant une température déterminée est guidée à partir de la boîte de vitesse automatique 40 en direction d'un échangeur de chaleur 10, selon un premier mode de réalisation, ou en direction d'un échangeur de chaleur 110, selon un deuxième mode de réalisation de la présente invention.

L'échangeur de chaleur 10, 110 est utilisé tout d'abord pour refroidir l'huile et, ensuite, pour stocker une quantité déterminée de chaleur à l'intérieur dudit échangeur de chaleur 10, 110, tel que décrit en référence aux figures 1 et 2. Si nécessaire, l'huile peut être refroidie lors d'une étape complémentaire grâce à un échangeur de chaleur 50, ledit échangeur de chaleur 50 pouvant être tout type d'échangeur de chaleur de l'art antérieur adapté pour refroidir de l'huile. La quantité d'huile circulant respectivement à l'intérieur des échangeurs de chaleur 10, 110, 50 est réglée grâce à la valve 60.

Lorsqu'une quantité déterminée d'huile est stockée à l'intérieur de l'échangeur de chaleur 10, 110, ledit échangeur de chaleur 10, 110 peut être utilisé lors des phases d'augmentation de température de l'huile. L'échangeur de chaleur 10, 110 permet alors une augmentation de la température de l'huile en provenance de la boîte de vitesse automatique 40, vers une température préférée et ce, dans un laps de temps limité. La valve 60 peut, par exemple, être utilisée au cours de la période durant laquelle la température de l'huile augmente, et ce afin d'éviter tout échange de chaleur entre ladite huile et l'échangeur de chaleur 50.

De façon alternative, tel que représenté sur la figure 5, l'échangeur de chaleur 10, 110 peut être utilisé dans une boucle de refroidissement dans laquelle la boîte de vitesse automatique 40 est connectée à un échangeur de chaleur 10, 110 ayant pour double fonction, d'une part, de refroidir l'huile et, d'autre part, de chauffer l'huile selon les températures souhaitées par un utilisateur.

La figure 6 montre une boucle de refroidissement comprenant un échangeur de chaleur 210 en référence à la figure 3. La boucle de refroidissement comprend également une boîte de vitesse automatique 40 et l'échangeur de chaleur de l'art antérieur 50. Selon les besoins de l'utilisateur, l'échangeur de chaleur 210 peut être utilisé pour refroidir ou réchauffer l'huile lors du fonctionnement de la boîte de vitesse automatique 40.

Il convient de noter que les figures 2 et 3 montrent deux exemples permettant de modifier le volume disponible nécessaire au stockage d'une quantité déterminée d'énergie à l'intérieur d'un échangeur de chaleur 110, 210. Cette modification de volume n'engendre pas de modification du volume nécessaire au sein du compartiment moteur. Il est possible d'appliquer d'autres ratios tels que 30% ou 40% de stockage, et 70% ou 60% de refroidissement concernant le volume du faisceau d'échange pour stocker de l'énergie et le volume du faisceau d'échange pour refroidir l'huile.

## Revendications

1. Echangeur de chaleur (10, 110, 210) pour échanger de la chaleur entre un premier composant dynamique et un composant statique, ledit échangeur de chaleur (10, 110, 210) comprenant un conteneur (11) et un faisceau d'échange (12, 112, 212) encapsulé dans ledit conteneur (11), ledit faisceau d'échange (12, 112, 212) comprenant au moins un premier conduit (20) pour guider le premier composant dynamique d'une première entrée vers une première sortie, le composant statique étant adjacent audit conduit et positionné à l'intérieur dudit faisceau d'échange (12, 112, 212), ledit composant statique étant adapté pour stocker et libérer une quantité déterminée de chaleur afin de permettre un échange de chaleur entre le premier composant dynamique et le composant statique.

2. Echangeur de chaleur (10, 110, 210) selon la revendication 1, dans lequel le premier composant dynamique comprend un fluide.

3. Echangeur de chaleur (10, 110, 210) selon la revendication 1, dans lequel le composant statique comprend un matériau à changement de phase (MCP).

4. Echangeur de chaleur (10, 110, 210) selon la revendication 3, dans lequel la température de changement de phase du matériau à changement de phase (MCP) est comprise entre 60°C et 95°C, préférablement entre 70°C et 90°C.

5. Echangeur de chaleur (10, 110, 210) selon l'une des revendications 3 ou 4, dans lequel le matériau à changement de phase comprend un eutectique.

6. Echangeur de chaleur (10, 110) selon l'une des revendications précédentes, dans lequel le faisceau d'échange (12, 112) comprend au moins un deuxième conduit (22, 23) pour guider un deuxième composant dynamique d'une deuxième entrée vers une deuxième sortie, ledit deuxième conduit (22, 23) étant adjacent au premier conduit pour guider le premier composant dynamique de la première entrée vers la première sortie, et positionné à l'intérieur du faisceau d'échange (10, 110) pour permettre un échange de chaleur entre le premier composant dynamique et le deuxième composant dynamique.

7. Echangeur de chaleur (10, 110) selon la revendication 6, dans lequel lesdits premiers et deuxièmes conduits (22, 23) pour guider le premier composant dynamique et le deuxième composant dynamique sont positionnés pour permettre une circulation du premier composant dynamique à contre-courant de la circulation du deuxième composant dynamique.

8. Echangeur de chaleur (10, 110) selon l'une des revendications 6 ou 7, dans lequel le faisceau d'échange de chaleur (12, 112) comprend une première zone (A ; AA) pour permettre l'échange de chaleur entre le premier composant dynamique et le composant statique, et une deuxième zone (B, C ; BB ; CC) pour permettre l'échange de chaleur entre le premier composant dynamique et le deuxième composant dynamique.
